# EUROPEAN PATENT APPLICATION

(11) **EP 2 757 123 A2**
(43) Date of publication of application: **23.07.2014**
(21) Application number: 14000159.5
(22) Date of filing: 16.01.2014
(51) Int. Cl.: C08G 59/18, C09D 163/00

(54) **Clear electrodepositable primers for radiator coatings**

(30) Priority: 18.01.2013 US 201361754001 P
(71) Applicant: PPG Industries Ohio Inc., Cleveland, OH 44111 (US)
(72) Inventor: Buszmak, Jérome, 59570 Taisniieres Sur Hon (FR)
(74) Representative: f & e patent

(57) **Abstract**

A radiator coating system including a primer composition for electrodeposition onto a radiator and a topcoat composition. The primer composition can include an active hydrogen-containing, cationic salt group-containing polymer, a zinc (II) amidine complex, and a polyisocyanate, wherein the primer composition is clear.

## Description

### FIELD OF THE INVENTION

The present invention relates to radiator coating systems having a clear primer composition and a topcoat.

### BACKGROUND OF THE INVENTION

Electrodeposition as a coating application method involves the deposition onto a conductive substrate of a film-forming composition under the influence of an applied electrical potential. Electrodeposition has gained popularity in the coatings industry because it provides higher paint utilization, outstanding corrosion resistance, and low environmental contamination as compared with non-electrophoretic coating methods. Both cationic and anionic electrodeposition is used commercially, with cationic being more prevalent in applications desiring a high level of corrosion protection.

Cationic electrodepositable compositions often comprise an aqueous resinous dispersion comprising (a) an active hydrogen-containing, cationic salt group-containing film-forming resin, and (b) an at least partially blocked isocyanate crosslinking agent. Such compositions also often include a catalyst for the reaction between the resin and the crosslinking agent, such as organotin compounds, among others. More recently, alternative catalysts, such as zinc (II) amidine complexes, have been introduced. Such catalysts are thought to provide better cure rates at relatively low temperatures (low temperature cures may be desirable to, for example, reduce energy costs) and may be less toxic and less environmentally undesirable than, for example, organotin compounds.

One drawback to the use of zinc (II) amidine complexes as a catalyst in low temperature cure compositions, however, has been the inability to achieve stable aqueous resinous dispersions comprising such catalysts in combination with an an active hydrogen-containing, cationic salt group-containing film-forming resin and an at least partially blocked isocyanate that deblocks at low temperatures. As a result, the use of such catalysts in "low temperature cure" applications has been difficult. The present invention, however, provides methods for using such catalysts in such applications.

### SUMMARY OF THE INVENTION

In certain respects, the present invention is directed to a coating system comprising an electrodepositable primer composition and a topcoat composition deposited on at least a portion of the primer composition, the primer composition comprising (a) an active hydrogen-containing, cationic salt group-containing polymer; (b) a zinc (II) amidine complex; and (c) a polyisocyanate.

### DETAILED DESCRIPTION

For purposes of the following detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in its respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances.

As indicated, certain embodiments of the present invention are directed to a coating system which is suitable for use with any conductive substrate and is particularly suited for coating radiators. All embodiments herein are understood to be encompassed by the present invention, whether used separately, in combination, or in sub-combinations thereof. The present invention is contemplated for use particularly with residential radiators, which are generally produced from steel and may be treated with anti-corrosion materials such as iron phosphate and/or zinc phosphate. The coating system of the present invention exhibits sufficient throw power to achieve uniform coating of a radiator, which may otherwise be particularly challenging to coat due to the curved and recessed surfaces thereof.

As used herein, when it is stated that a composition is "substantially free" of a particular substance, it means that the substance being referred to, such as a pigment, is not present in the composition in an amount sufficient to impact properties of the composition. As used herein, when it is stated that a composition is "completely free" of a particular substance, it means that the substance is not present in the composition at all.

While prior electrodeposition primer coatings for radiators have typically included a pigment, especially TiO₂, in certain embodiments the present invention includes a primer composition that is substantially clear. Thus, as used herein, "substantially clear" means that the composition when applied to a substrate and cured is sufficiently transparent that the substrate is visible therethrough. In certain embodiments, the primer composition is substantially free of pigment, such as TiO₂ (which may reduce the cost compared to TiO₂ containing primer coatings), and in other embodiments, the primer composition is "completely free" of pigment such as "completely free" of TiO₂. By "substantially free" of pigment it is meant that pigment may be present in an amount that is not detectable to the human eye as exhibiting any color or color effect.

In certain embodiments, the coating system comprises a primer composition including a first aqueous resinous dispersion and a second aqueous resinous dispersion. The first aqueous resinous dispersion may be referred to herein as a "binder", and the second aqueous resinous dispersion may be referred to herein as a "paste".

As used herein, the phrase "aqueous resinous dispersion" refers to a two-phase resinous system in which a polymer is in the dispersed phase and the dispersing medium, which includes water, is in the continuous phase. In the present invention, these aqueous resinous dispersions may be electrodepositable aqueous resinous dispersions. As used herein, "electrodepositable aqueous resinous dispersion" refers to an aqueous resinous dispersion that is suitable for use in an electrodepositable coating composition, that is, a coating composition that is capable of being deposited onto a conductive substrate under the influence of an applied electrical potential. In certain embodiments, the aqueous resinous dispersions described herein are stable dispersions. As used herein, the term "stable dispersion" refers to a dispersion that does not gel, flocculate, or precipitate when maintained at a temperature of 25°C for at least 60 days, or, if some precipitation does occur, the precipitate can be redispersed upon agitation.

As will be appreciated, the dispersing medium can, in certain embodiments, contain some organic cosolvents in addition to water. In certain embodiments, the organic cosolvents are at least partially soluble with water. Examples of such solvents include oxygenated organic solvents, such as monoalkyl ethers of ethylene glycol, diethylene glycol, propylene glycol, and dipropylene glycol which contain from 1 to 10 carbon atoms in the alkyl group, such as the monoethyl and monobutyl ethers of these glycols. Examples of other at least partially water-miscible solvents include alcohols such as ethanol, isopropanol, butanol and diacetone alcohol. If used, the organic cosolvents are, in certain embodiments, used in amounts less than 10 percent by weight, such as less than 5 percent by weight, based on total weight of the dispersing medium.

First aqueous resinous dispersion (binder). In the present invention, the first aqueous resinous dispersion (binder) comprises (a) an active hydrogen-containing, cationic salt group-containing polymer; and (b) a zinc (II) amidine complex.

As used herein, the term "an active hydrogen-containing, cationic salt group-containing polymer" refers to a polymer that includes active hydrogen functional groups and at least partially neutralized cationic groups, such as sulfonium groups and amine groups, which impart a positive charge. As used herein, the term "polymer" encompasses, but is not limited to, oligomers and both homopolymers and copolymers. As used herein, the term "active hydrogen functional groups" refers to those groups that are reactive with isocyanates as determined by the Zerewitnoff test as is described in the JOURNAL OF THE AMERICAN CHEMICAL SOCIETY, Vol. 49, page 3181 (1927) and include, for example, hydroxyl groups, primary or secondary amine groups, and thiol groups. In certain embodiments, the active hydrogen functional groups are hydroxyl groups, primary amine groups, and/or secondary amine groups.

Examples of polymers that are suitable for use as the active hydrogen-containing, cationic salt group-containing polymer in the present invention include, but are not limited to, alkyd polymers, acrylics, polyepoxides, polyamides, polyurethanes, polyureas, polyethers, and polyesters, among others. In certain embodiments, such polymers comprise amine and/or hydroxyl groups.

More specific examples of suitable active hydrogen-containing, cationic salt group-containing polymers include polyepoxide-amine adducts, such as the adduct of a polyglycidyl ethers of a polyphenol, such as Bisphenol A, and primary and/or secondary amines, such as are described in United States Patent No. 4,031,050 at col. 3, line 27 to col. 5, line 50, United States Patent No. 4,452,963 at col. 5, line 58 to col. 6, line 66, and United States Patent No. 6,017,432 at col. 2, line 66 to col. 6, line 26. In certain embodiments, a portion of the amine that is reacted with the polyepoxide is a ketimine of a polyamine, as is described in United States Patent No. 4,104,117 at col. 6, line 23 to col. 7, line 23. Also suitable are ungelled polyepoxide-polyoxyalkylenepolyamine resins, such as are described in United States Patent No. 4,432,850 at col. 2, line 60 to col. 5, line 58. In addition, cationic acrylic resins, such as those described in United States Patent No. 3,455,806 at col. 2, line 18 to col. 3, line 61 and United States Patent No. 3,928,157 at col. 2, line 29 to col. 3, line 21, can be used.

Besides amine salt group-containing resins, quaternary ammonium salt group-containing resins can also be employed as a cationic salt group-containing polymer in the present invention. Examples of these resins are those which are formed from the reaction of an organic polyepoxide with a tertiary amine acid salt. Such resins are described in United States Patent No. 3,962,165 at col. 2, line 3 to col. 11, line 7, United States Patent No. 3,975,346 at col. 1, line 62 to col. 17, line 25, and United States Patent No. 4,001,156 at col. 1, line 37 to col. 16, line 7. Examples of other suitable cationic resins include ternary sulfonium salt group-containing resins, such as those described in United States Patent No. 3,793,278 at col. 1, line 32 to col. 5, line 20. Also, cationic resins which cure via a transesterification mechanism, such as described in European Patent Application No. 12463B1 at p. 2, line 1 to p. 6, line 25, can also be employed.

Other suitable cationic salt group-containing resins include those that may form photodegradation resistant electrodepositable coating compositions. Such polymers include the polymers comprising cationic amine salt groups which are derived from pendant and/or terminal amino groups that are disclosed in United States Patent Application Publication No. 2003/0054193 A1 at [0064] to [0088]. Also suitable are the active hydrogen-containing, cationic salt group-containing resins derived from a polyglycidyl ether of a polyhydric phenol that is essentially free of aliphatic carbon atoms to which are bonded more than one aromatic group, which are described in United States Patent Application Publication No. 2003/0054193 A1 at [0096] to [0123].

In certain embodiments, the active hydrogen-containing, cationic salt group-containing polymer is present in the first aqueous resinous dispersion in an amount of 50 to 99 percent by weight, such as 70 to 95 percent by weight, based on the total solids weight of the first aqueous resinous dispersion.

The first aqueous resinous dispersion also comprises a zinc (II) amidine complex. In certain embodiments, the zinc (II) amidine complex contains amidine and carboxylate ligands. More specifically, in certain embodiments, the zinc (II) amidine complex is as described in United States Patent No. 7,485,729 at col. 7, line 43 to col. 8, line 51 and col. 10, line 11 to col. 12, line 61. As will be appreciated, the foregoing patent describes compounds having the formula Zn(A)₂(C)₂ wherein A represents an amidine and C represents a carboxylate. More specifically, A may be represented by the formula (1) or (2): 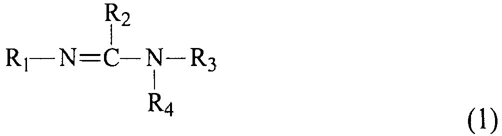 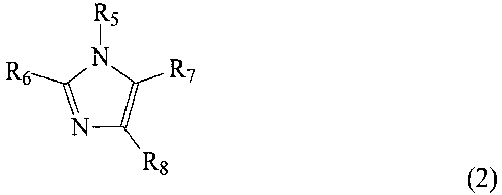 in which R₁-R₈ are described, for example, in United States Patent No. 7,485,729 at col. 10, line 37 to col. 11, line 31, and C is an aliphatic, aromatic or polymeric carboxylate with an equivalent weight of 45 to 465.

Such a zinc (II) amidine complex is commercially available from King Industries of Norwalk, Connecticut under product code K-KAT® XK620.

In certain embodiments, the zinc (II) amidine complex is present in the first aqueous resinous dispersion in an amount of 1 to 40 percent by weight, such as 10 to 30 percent by weight, based on the total solids weight of the first aqueous resinous dispersion.

In addition to the active hydrogen-containing, cationic salt group-containing polymer, the first aqueous resinous dispersion also comprises a polyisocyanate.

The polyisocyanates that can be used in the first aqueous resinous dispersion include aliphatic and aromatic polyisocyanates. Representative examples of aliphatic polyisocyanates are (a) alkylene isocyanates, such as trimethylene, tetramethylene, pentamethylene, hexamethylene, 1,2-propylene, 1,2-butylene, 2,3-butylene, 1,3-butylene, ethylidene and butylidene diisocyanates, and (b) cycloalkylene isocyanates, such as 1,3-cyclopentane, 1,4-cyclohexane, 1,2-cyclohexane diisocyanates and isophorone diisocyanates. Representative examples of suitable aromatic polyisocyanates are (a) arylene isocyanates, such as m-phenylene, p-phenylene, 4,4'-diphenyl, 1,5-naphthalene and 1,4-naphthalene diisocyanates, and (b) alkarylene isocyanates, such as 4,4'-diphenylene methane, 2,4- or 2,6-tolylene, or mixtures thereof, 4,4'-toluidine, and 1,4-xylylene diisocyanates. Triisocyanates, such as triphenyl methane-4,4',4"-triisocyanate, 1,3,5-triisocyanato benzene and 2,4,6-triisocyanato toluene, tetraisocyanates, such as 4,4'-diphenyldimethyl methane-2,2',5,5'-tetraisocyanate, and polymerized polyisocyanates, such as tolylene diisocyanate dimers and trimers and the like, can also be used.

As will be appreciated, the first aqueous resinous dispersion may include any of a variety of optional ingredients, such as antioxidants, biocides, defoamers, surfactants, wetting agents, dispersing aids, clays, hindered amine light stabilizers, UV light absorbers and stabilizers, or combinations thereof. Alternatively, these optional ingredients may be added to a final coating composition.

In certain embodiments, the first aqueous resinous dispersion is substantially free, or, in some cases, completely free of environmentally unfriendly tin-containing metal catalysts (such as dibutyltin dilaurate, dibutyltin dioxde, dibutyltin dineodecanoate, dibutyltin diacetate, dioctyltin dioleate, among others). As used herein, when it is stated that an aqueous resinous dispersion is "substantially free" of tin-containing metal catalysts, it means that such a material is present in the aqueous resinous dispersion in an amount such that when the coating composition is formed, the material is present in an amount of less than 0.1 percent by weight, based on the total weight of resin solids in the coating composition.

Second aqueous resinous dispersion (paste). In certain embodiments of the present invention, the second aqueous resinous dispersion is completely free of pigment, such as TiO₂, As such, the second aqueous resinous dispersion without pigment may be referred to as being a "clear paste". In certain embodiments, the second aqueous resinous dispersion is substantially free, or, in some cases, completely free of any crosslinking agent, such as a polyisocyanate.

The active hydrogen-containing, cationic salt group-containing polymer present in the second aqueous resinous dispersion may comprise any of the polymers described above with respect to the first aqueous resinous dispersion. In some embodiments, the first aqueous resinous dispersion and the second aqueous resinous dispersion comprise the same active hydrogen-containing, cationic salt group-containing polymer. In some embodiments, the first aqueous resinous dispersion and the second aqueous resinous dispersion comprise active hydrogen-containing, cationic salt group-containing polymers that are different from each other. For example, in some embodiments, the first aqueous resinous dispersion comprises an ungelled polyepoxide-polyoxyalkylenepolyamine resin, as described above, and the second aqueous resinous dispersion comprises a polyepoxide-amine adduct, wherein a portion of the amine that is reacted with the polyepoxide is a ketimine of a polyamine, as described above.

In certain embodiments, the active hydrogen-containing, cationic salt group-containing polymer is present in the second aqueous resinous dispersion in an amount of 50 to 90 percent by weight, such as 60 to 80 percent by weight, based on the total solids weight of the second aqueous resinous dispersion.

As will be appreciated, the second aqueous resinous dispersion may, if desired, include any of a variety of optional ingredients, such as antioxidants, biocides, defoamers, surfactants, wetting agents, dispersing aids, clays, hindered amine light stabilizers, UV light absorbers and stabilizers, or combinations thereof. Again, these optional ingredients may instead be added to a final coating composition.

While any methods known in the art can be used for making coatings according to the present invention, the Examples herein illustrate suitable methods for making the first and second aqueous resinous dispersions. In certain embodiments, the active hydrogen-containing, cationic salt group-containing polymer is formed prior to mixture with the zinc (II) amidine complex, while in certain embodiments, an active hydrogen-containing, cationic salt group-containing polymer is mixed with the zinc (II) amidine complex prior to the polymeric material being reacted with a cationic salt group to form a cationic salt group-containing polymer. In either of these embodiments, water may then be added to the mixture. In certain embodiments, the zinc (II) amidine complex is first mixed with water, or a mixture of water and an acid, prior to its mixture with the polymer. Exemplary acids for this purpose include, but are not limited to, lactic acid, acetic acid, formic acid, and/or sulfamic acid.

As indicated earlier, in the present invention, the first aqueous resinous dispersion is combined with the second aqueous resinous dispersion to produce the primer composition of the present invention. Moreover, in the methods of the present invention, the second aqueous resinous dispersion comprises an active hydrogen-containing, cationic salt group-containing polymer substantially free of any crosslinking agent and/or pigment.

In the methods of the present invention, the first aqueous resinous dispersion is combined with the second aqueous resinous dispersion. Such combining can occur in any suitable container, including, but not limited to, an electrodeposition bath, under suitable agitation.

The resin solids content of the compositions produced according to the methods of the present invention depends upon the particular end use thereof and is often not critical. Compositions containing at least 1 percent by weight, such as from 5 to 40 percent by weight or 5 to 20 percent by weight of resin solids are common. By "resin solids" is meant the non-volatile organic content of the composition, i.e., organic materials which will not volatilize when heated to 110°C for 15 minutes, and would exclude organic solvents.

In certain embodiments, the primer compositions produced by the methods of the present invention are deposited upon an electrically conductive substrate, particularly a radiator, by placing the primer composition in contact with an electrically conductive anode and an electrically conductive cathode, with the surface to be coated being the cathode. Residential radiators are particularly suited for coating with the clear primer composition of the present invention. Such radiators are typically produced from steel with optional surface treatments of iron phosphate and/or zinc phosphate. Following contact with the primer composition, an adherent film of the primer composition is deposited on the cathode and a sufficient voltage is impressed between the electrodes. The conditions under which the electrodeposition is carried out are, in general, similar to those used in electrodeposition of other types of coatings. The applied voltage may be varied and can be, for example, as low as one volt to as high as several thousand volts, but is often between 50 and 500 volts. The current density is often between 0.5 ampere and 15 amperes per square foot and tends to decrease during electrodeposition indicating the formation of an insulating film.

Once the electrodepositable primer composition is electrodeposited over at least a portion of the electroconductive substrate, the coated substrate is heated to a temperature and for a time sufficient to cure the electrodeposited coating on the substrate. In certain embodiments, the coated substrate is heated to a temperature ranging from 280°F to 370°F (137.7°C to 187.8°C). The curing time can be dependent upon the curing temperature as well as other variables, for example, film thickness of the electrodeposited coating. For purposes of the present invention, all that is necessary is that the time be sufficient to effect cure of the coating on the substrate. For example, the curing time can range from 10 minutes to 60 minutes, such as 20 to 40 minutes.

In certain embodiments, the coated substrate is heated to a temperature of 300°F (149°C) or less for a time sufficient to effect cure of the electrodeposited coating on the substrate. The thickness of the resultant cured coating often ranges from 10 to 30 microns.

The radiator coated with the clear electrodeposited primer coating of the present invention may be subsequently coated with a topcoat coating composition, such as a pigmented topcoat composition, i.e. a topcoat composition comprising TiO₂ and/or other pigments. In certain embodiments, the topcoat composition is a powder coating composition.

In certain embodiments, therefore, the present invention is also directed to methods for coating a radiator with a clear primer composition and an optional powder coating topcoat. In certain embodiments, such methods comprise (a) electrophoretically depositing on the radiator a primer composition of the present invention and (b) heating the coated radiator to a temperature and for a time sufficient to cure the electrodeposited coating on the radiator. In certain embodiments, such methods comprise (a) electrophoretically depositing on the radiator a primer composition of the present invention to form an electrodeposited coating over at least a portion of the radiator, (b) heating the coated radiator to a temperature and for a time sufficient to cure the electrodeposited coating on the radiator, (c) applying to the cured electrodeposited coating one or more pigment-containing coating compositions and/or one or more pigment-free coating compositions to form a topcoat over at least a portion of the cured electrodeposited coating, and (d) heating the coated substrate of step (c) to a temperature and for a time sufficient to cure the topcoat. The topcoat coating composition may be a powder coating.

Illustrating the invention are the following examples, which, however, are not to be considered as limiting the invention to their details. Unless otherwise indicated, all parts and percentages in the following examples, as well as throughout the specification, are by weight.

### EXAMPLES

### Example 1: Epoxy resin composition

Two aqueous resinous dispersions were produced. A first aqueous resinous dispersion containing an an active hydrogen-containing, cationic salt group-containing polymer and a blocked isocyanate was prepared (Example 1A) and mixed with a second aqueous resinous dispersion containing zinc (II) amidine complex (Example 1B) using the components listed in Tables 1 and 2.

**Table 1**

| **Example 1A** | | |
|---|---|---|
| # | **Material** | **Parts** |
| 1 | Epikote 880¹ | 4631.6 |
| 2 | Bisphenol A | 2000 |
| 3 | Ethoxylated bisphenol A polyol | 753.5 |
| 4 | Ethyl triphenylphosphonium iodide | 4.5 |
| 5 | Methyl isobutyl ketone | 301 |
| 6 | 1-phenoxy 2 propanol | 140 |
| 7 | Blocked polyisocyanate² | 7772.4 |
| 8 | Diketimine³ | 574.5 |
| 9 | Methyl ethanol amine | 364 |
| 10 | Sulfamic acid | 412 |
| 11 | Deionized water | 15185 |
| 12 | Epikote 880 | 183 |
| 13 | Deionized water | 10129 |

| | | |
|---|---|---|
| ¹Epoxy resin available from Momentive ²Polymeric methylene diphenyl diisocyanate, blocked via residues of propylene glycol and butyl glycol. ³Formed as the reaction product of diethylenetriamine and methyl isobutyl ketone. | | |

Materials 1, 2, 3, 4, and 5 listed in Table 1 were loaded in the reactor and heated to 110°C. At this point, the exothermic reaction mixture reached 165°C, which was held for 1 hour. Then, materials 6 and 7 were added and the temperature was held at 105°C for 30 minutes. Materials 8 and 9 were loaded, and the reactor was held for 1 hour at 110-115°C. The reactor contents were then poured into another container that included materials 10 and 11. Material 12 was added in the new container, and the temperature was held at 70°C for 2 hours. Then, material 13 was added before a solvent stripping phase. The solvent was removed by vacuum to form a cationic resin having a solid content of 38%. The final dispersion was stable with a particle size of 1000-1500Å.

**Table 2**

| **Example 1B** | | |
|---|---|---|
| # | **Material** | **Parts** |
| 1 | Epikote 880¹ | 5640 |
| 2 | Bisphenol A | 1710 |
| 3 | Diethylene glycol monobutyl ether | 820 |
| 4 | Ethyl triphenylphosphonium iodide | 10 |
| 5 | Butyl carbitol formal | 2240 |
| 6 | Jeffamine D2000⁴ | 20140 |
| 7 | Poly(arylalkyl)phenol-polyethyleneglycolether⁵ | 820 |
| 8 | K-KAT XK-620⁶ | 7290 |
| 9 | Lactic acid | 4760 |
| 10 | Deionized water | 40000 |
| 11 | Deionized water | 16580 |

| | | |
|---|---|---|
| ⁴A propylene oxide resin terminated with primary amines available from Huntsman Chemical ⁵Non-ionic surfactant from Clariant ⁶Zinc amidine catalyst commercially available from King Industries | | |

Materials 1, 2, 3 and 4 of Table 2 were loaded into a reactor and heated to 130°C, at which point the reaction became exothermic. The temperature inside the reactor was then adjusted to 130°C for 1 hour. After 1 hour, materials 5 and 6 were added and the temperature was held at 125°C-130°C for 3 hours. At 115°C, the reactor content was then poured into another container that included materials 7, 8, 9 and 10. The composition was stirred for 30 minutes and material 11 was added. The resultant resin composition had a solid content of 39%. No settling over time (60 days) was observed.

The compositions produced in Example 1A and Example 1B were blended together in the proportions indicated in Table 3 to produce an epoxy resin composition.

**Table 3**

| **Epoxy resin composition** | | |
|---|---|---|
| # | **Material** | **Parts** |
| 1 | Example 1A | 92 |
| 2 | Example 1B | 8 |

### Example 2: Epoxy resin binder

An epoxy resin binder was prepared using the epoxy resin composition of Example 1, using the materials listed in Table 4, at 36% solids.

**Table 4**

| **Epoxy resin binder** | | |
|---|---|---|
| # | **Material** | **Parts** |
| 1 | Epoxy resin composition from Example 1 | 81 |
| 2 | Cationic epoxy polymer (20% in water)⁷ | 2 |
| 3 | Surfactant⁸ | 0.3 |
| 4 | Deionized water | 8.7 |
| 5 | 2,2,4-trimethyl-1,3-pentanediol mono(2-methylpropanoate) | 3 |
| 6 | Cationic polyglycol polymer (36% in water)⁷ | 5 |

| | | |
|---|---|---|
| ⁷Manufactured by PPG Industries, Inc. ⁸Ethoxylated fatty amine manufactured by PPG Industries, Inc. | | |

Materials 2, 3, 4, and 5 of Table 4 were loaded into a reactor with agitation and stirred for 1 hour until a homogeneous mixture was achieved at each step. The mixture was slowly poured into material 1 and stirred for 30 minutes. Then, material 6 was slowly added to the mixture. The final binder is stirred for 30 minutes.

### Example 3: Epoxy resin paste

An epoxy resin paste was prepared using the materials listed in Table 5, at 52% solids.

**Table 5**

| # | Material | Parts |
|---|---|---|
| 1 | Cationic epoxy polymer (32% in water)⁹ | 33.1 |
| 2 | Cationic epoxy polymer (37% in water)¹⁰ | 25.25 |
| 3 | XX-02174¹¹ | 1.13 |
| 4 | Deionized water | 3.41 |
| 5 | Butoxy propanol | 0.77 |
| 6 | Methoxy propanol | 0.77 |
| 7 | Kaolin | 33.53 |
| 8 | Deionized water | 1.04 |
| 9 | Deionized water | 1 |

| | | |
|---|---|---|
| ⁹Sulfonium grind vehicle manufactured by PPG Industries, Inc. ¹⁰Amonium grind vehicle manufactured by PPG Industries, Inc. ¹¹Wetting agent manufactured by PPG Industries, Inc., based on poly (oxy-1, 2-ethanediyl), α-[tris (1-phenylethyl) phenyl]-ω-hydroxy-. | | |

Materials 1, 2, 3 and 4 of Table 5 were sequentially charged to a tank then stirred at low speed until the mixture was homogeneous. Next, solvents 5 and 6 were added to the mixture, with additional stirring until homogeneous. At this point the kaolin (material 7) was slowly added to the mixture and when the powder was fully incorporated, the slurry was mixed with a high shear stress (at approximately 12m/s, for a minimum of 40 minutes). The deionized water (material 8) was added to decrease the viscosity around 1000Cps @50rpm, 25°C; then ground using a horizontal mill until achieving Hegman gauge of 7. As soon as the paste was ground, the viscosity was adjusted with the deionized water (material 9) to lower the viscosity to approximately 500 Cps @50rpm. The cationic paste was then ready for use.

### Example 4: Clear electrocoat

This example describes an electrocoat bath produced using the tin free epoxy resin binder and epoxy resin paste from Examples 2 and 3, respectively, as listed in Table 6.

**Table 6**

| Material | Parts |
|---|---|
| Example 2 | 55.3 |
| Example 3 | 7.5 |
| Deionized water | 37.2 |

The deionized water was incorporated on the top of the material from Example 2 with stirring, and then the material from Example 3 was slowly blended to the previous mixture. The resulting electrocoat bath contained approximately 22% solids, with a pigment to binder ratio of approximately 0.15.

### Comparative Examples 5A-5B: White electrocoat

The following electrocoat baths were produced using white epoxy resin pastes with dibutyltin oxide (DBTO), or dioctyltin oxide (DOTO) as catalysts, or catalyst free (CP477), with 20% solids and a pigment to binder ratios of 0.18.

### Comparative Example 5A: DBTO catalyst @ 20% Solids & P/B ratio 0.18

**Table 7**

| Material | Parts |
|---|---|
| CR 459¹² | 48 |
| CP 521B¹³ | 9.8 |
| Deionized water | 42.2 |

| | |
|---|---|
| ¹²POWERCRON cationic resin commercially available from PPG Industries, Inc. ¹³Cationic resin containing pigments commercially available from PPG Industries, Inc. | |

### Comparative Example 5B: DOTO catalyst

**Table 8**

| Material | Parts |
|---|---|
| CR 459 | 50.2 |
| CP 458¹⁴ | 5.5 |
| Deionized water | 44.3 |

| | |
|---|---|
| ¹⁴Cationic resin containing pigments commercially available from PPG Industries, Inc. | |

### Comparative Example 5C: Zinc amidine catalyst

**Table 9**

| Material | Parts |
|---|---|
| Epoxy resin binder from Example 2 | 49 |
| CP 477¹⁵ | 6 |
| Deionized water | 45 |

| | |
|---|---|
| ¹⁵Cationic resin containing pigments commercially available from PPG Industries, Inc. | |

### Comparison of Electrodepositable Coating Compositions

The composition of Example 4 and Comparative Examples 5A, 5B and 5C were coated at the desired film build of 10-12µm with the coating conditions reported in Table 10. All examples were examined for throw power and corrosion resistance properties as reported in Table 10. Throw power is a measure of the ability of the coating composition to be electrodeposited in more recessed areas of a substrate. A composition with high throw power (100%) will be electrodeposited onto a conductive substrate in a generally uniform thickness.

**Table 10**

| Paint | Salt Spray over CRS/Iron phosphate | Salt Spray over CRS/Zinc phosphate | Throw Power |
|---|---|---|---|
| Example 4 (2'/26C/300V) | 0.7mm | 0.5mm | 100% |
| Comparative Example 5A (2'/25C/250V) | 5mm | 0.5mm | 100% |
| Comparative Example 5B (2'/26C/250V) | 2.0mm | 0.5mm | 100% |
| Comparative Example 5C (2'/26C/250V) | 1.0mm | 0.5mm | 100% |

Whereas particular embodiments of the invention have been described hereinabove for purposes of illustration, it will be evident to those skilled in the art that numerous variations of the details of the present invention may be made without departing from the invention as defined in the appended claims.

## Claims

1. A coating system comprising an electrodepositable primer composition and a topcoat composition deposited on at least a portion of the primer composition, the primer composition comprising (a) an active hydrogen-containing, cationic salt group-containing polymer; (b) a zinc (II) amidine complex; and (c) a polyisocyanate.

2. The coating system of claim 1, wherein the active hydrogen-containing, cationic salt group-containing polymer comprises an ungelled polyepoxide-polyoxyalkylenepolyamine resin.

3. The coating system of claim 1 or 2, wherein the active hydrogen-containing, cationic salt group-containing polymer further comprises a polyepoxide-amine adduct, wherein a portion of the amine that is reacted with the polyepoxide is a ketimine of a polyamine.

4. The coating system of any one of the preceding claims, wherein the zinc (II) amidine complex comprises amidine and carboxylate ligands.

5. The coating system of any one of the preceding claims, wherein the primer composition cures at a temperature of 280°F to 370°F.

6. The coating system of any one of the preceding claims, wherein the topcoat composition comprises a powder coating composition.

7. The coating system of any one of the preceding claims, wherein the topcoat composition comprises a white coating composition, preferably the topcoat composition comprises TiO₂.

8. The coating system of any one of the preceding claims, wherein the primer is substantially clear.

9. A method for coating a radiator comprising placing the primer composition of any one of claims 1 to 8 in contact with an electrically conductive anode and an electrically conductive cathode, wherein the cathode comprises a surface of the radiator to be coated, wherein the primer composition is deposited on at least a portion of the radiator.

10. The method of claim 9, further comprising applying a topcoat composition to at least a portion of the primer composition.

11. The method of claim 9 or 10, wherein the topcoat composition comprises a powder coating composition.

12. The method of any one of claims 9 to 11, wherein the topcoat composition comprises a white coating composition, preferably the topcoat composition comprises TiO₂.

13. The method of any one of claims 9 to 12, wherein the primer composition is cured prior to application of the topcoat composition.

14. A radiator comprising the coating system of any one of claims 1 to 8 coated onto at least a portion of the radiator.

15. A radiator coating produced according to the method of any one of claims 9 to 13.
